# EUROPEAN PATENT APPLICATION

(11) **EP 1 693 770 A2**
(43) Date of publication of application: **23.08.2006**
(21) Application number: 06100435.4
(22) Date of filing: 17.01.2006
(51) Int. Cl.: G06F 17/30

(54) **Query spelling correction method and system**

(30) Priority: 22.02.2005 US 64405
(71) Applicant: Microsoft Corporation, Redmond WA 98052 (US)
(72) Inventor: Harmon, Justin, Harriman, TN 37748 (US); Peltonen, Kyle G., Redmond, WA 98052 (US); Dasan, Shajan, Redmond, WA 98052 (US)
(74) Representative: Zimmer, Franz-Josef

(57) **Abstract**

A method and system for providing to a user a set of alternative query suggestions is disclosed. The method, system and computer readable medium product in accordance with embodiments of the invention includes generating an index of all words in a corpus of documents available to the application, generating a popularity table for the index having a popularity value for each word in the index based on occurrences of the word in the corpus, comparing each entry in the popularity table to suggestions from a word generator, compiling a lexicon of word generator suggestion words that are found in the popularity table, submitting each word in the search query to the word generator to determine suggestion words, and displaying to the user one or more of the suggestion words from the lexicon that are more popular than the query word.

## Description

### Field of the Invention

This application relates generally to computer software and more particularly to a method and system for proposing to a user alternative query word spellings during queries in an application.

### Background of the Invention

Users sometimes make spelling mistakes when issuing a search query in an application or on an operating system. Often the search engine does not detect these misspellings. The user may not realize the mistake, and perceives the search engine as bad. Further, users may not find the documents they were looking for. One way of solving this problem is to use a word generator - like the Microsoft® Office word generator - to detect misspellings. The corrected words can be displayed back to the user as alternate query suggestions.

Google, for example, is believed to maintain a list of all words on the internet that are indexed, along with a relevancy value for each document that is basically the density of that word in the document. The 'Did You Mean' feature of the Google search engine seems to work much like the word generator included in most Microsoft® Office products in that it looks at your query and tries to generate alternate spellings. However, it then looks up relevancy values for those alternatives and if it calculates that one of those 'alternate' queries would return "more relevant" results, then it suggests that one. However, Google sometimes makes suggestions that do not return any documents. Therefore Google's way of generating the relevancy of the suggested queries is not perfect, but is an approximation. This functionality is not currently available within most applications.

It is with respect to these and other considerations that the present invention has been made.

### Summary of the Invention

In accordance with the present invention, the above and other problems are solved by a system for handling queries in an application in which each query word is analyzed, and popular alternatives are provided as suggestions to the user based on prevalence, i.e. popularity of the word's usage in the corpus of documents available to the application. This system also includes a word generator which provides similar spellings to a query word, an index of all words occurring in the corpus of documents available to the application, a popularity table that provides a popularity, i.e. relevance, value accorded to each entry in the index, and a lexicon of word generator words that appear in the popularity table.

The method in accordance with embodiments of the present invention for generating query suggestions to a user during a query in an application includes analyzing each word in a query with a word generator to determine suggestion words, comparing each word suggestion obtained from the word generator to entries in a popularity table of words to determine popular suggestion words, and displaying to the user one or more of the suggestion words that are more popular than the query word. The analyzing operations comprise generating an index of all words in a corpus of documents available to the application and generating the popularity table having a popularity value for each word in the index based on occurrences of the word in the corpus.

More particularly, the method, system and computer readable medium product in accordance with embodiments of the invention includes generating an index of all words in a corpus of documents available to the application, generating a popularity table for the index having a popularity value for each word in the index based on occurrences of the word in the corpus, word generator compiling a lexicon of word generator suggestion words that are found in the popularity table, submitting each word in the search query to the word generator to determine suggestion words, determining the popularity value for each suggestion word from the word generator from the popularity table, and displaying to the user one or more of the suggestion words from the lexicon that are more popular than the query word.

The invention may be implemented as a computer process, a computing system or as an article of manufacture such as a computer program product. The computer program product may be a computer storage medium readable by a computer system and encoding a computer program of instructions for executing a computer process. The computer program product may also be a propagated signal on a carrier readable by a computing system and encoding a computer program of instructions for executing a computer process.

A more complete appreciation of the present invention and its improvements can be obtained by reference to the accompanying drawings, which are briefly summarized below, and to the following detailed description of presently preferred embodiments of the invention, and to the appended claims.

### Brief Description of the Drawings

Fig. **1** illustrates an exemplary alternate query suggestion system according to an embodiment of the present invention.
Fig. **2** shows a computer system environment that may incorporate software operating according to particular aspects of the present invention.
Fig. **3** illustrates a more detailed diagram of the alternate query suggestion system shown in FIG. 1.
FIG. **4** is a process flow diagram of operation of the embodiment shown in Fig. **1.**

### Detailed Description of the Invention

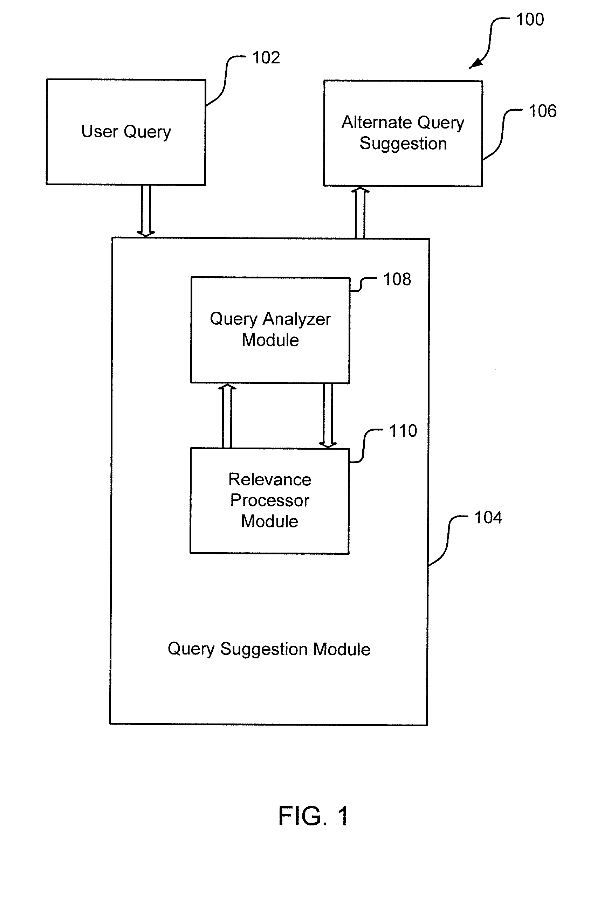

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In accordance with embodiments of the invention, the methods described herein may be performed on a single, stand-alone computer system but are more typically performed on multiple computer systems interconnected to form a distributed computer network. Fig. 1 illustrates one embodiment of a query suggestion system **100** in accordance with the present invention. The system **100** may be operable in any software application or operating system. The system receives a user query **102** and passes that query to a search engine (not shown) in a conventional manner. At the same time, the user query **102** is passed to a query suggestion module **104.** The query suggestion module **104** receives the user query **102,** analyzes the query and, under certain conditions, discussed more fully below, provides to the user alternate query suggestions **106** that the user might choose to utilize.

The query suggestion module **104** basically comprises two modules: a query analyzer module **108** and a relevance processor module **110.** The query analyzer module **108** feeds the query to the relevance processor module in order to get relevance information regarding potential alternate query words. These alternate query words and their relevance are then fed back to the query analyzer **108,** which then determines whether or not to provide one or more alternate query suggestions **106.**

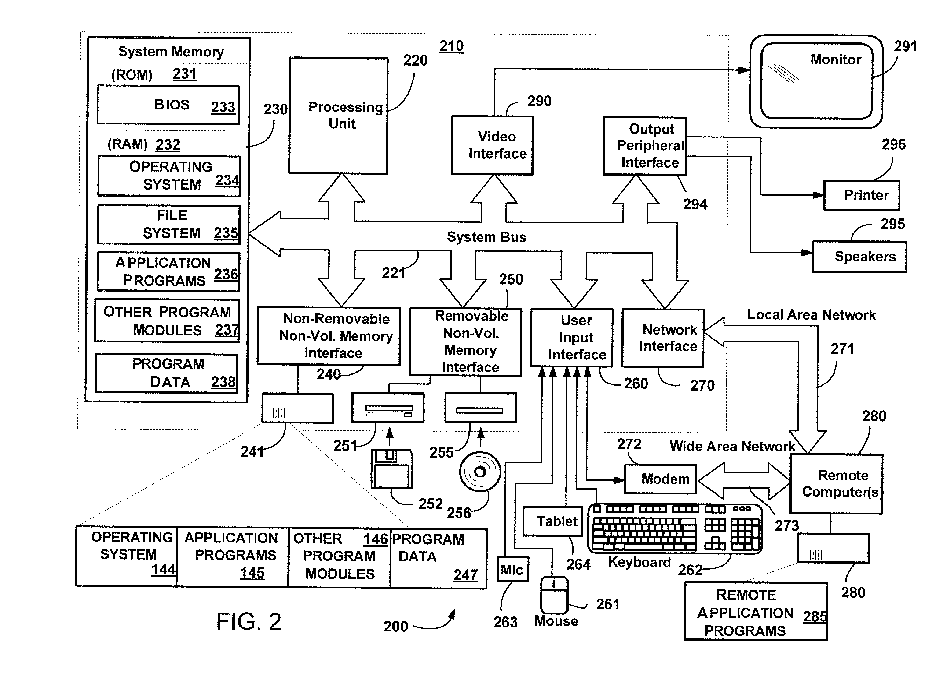

Fig. **2** illustrates an exemplary environment **200** for implementing an embodiment of the invention. This environment **200** includes a general purpose computing device in the form of a computer **210.** Components of the computer **210** may include, but are not limited to, a processing unit **220,** a system memory **230,** and a system bus **221** that couples various system components including the system memory to the processing unit **220.** The system bus **221** may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, Accelerated Graphics Port (AGP) bus, and Peripheral Component Interconnect (PCI) bus also known as Mezzanine bus.

The computer **210** typically includes a variety of computer-readable media. Computer-readable media can be any available media that can be accessed by the computer **210** and includes both volatile and nonvolatile media, and removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer **210.** Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

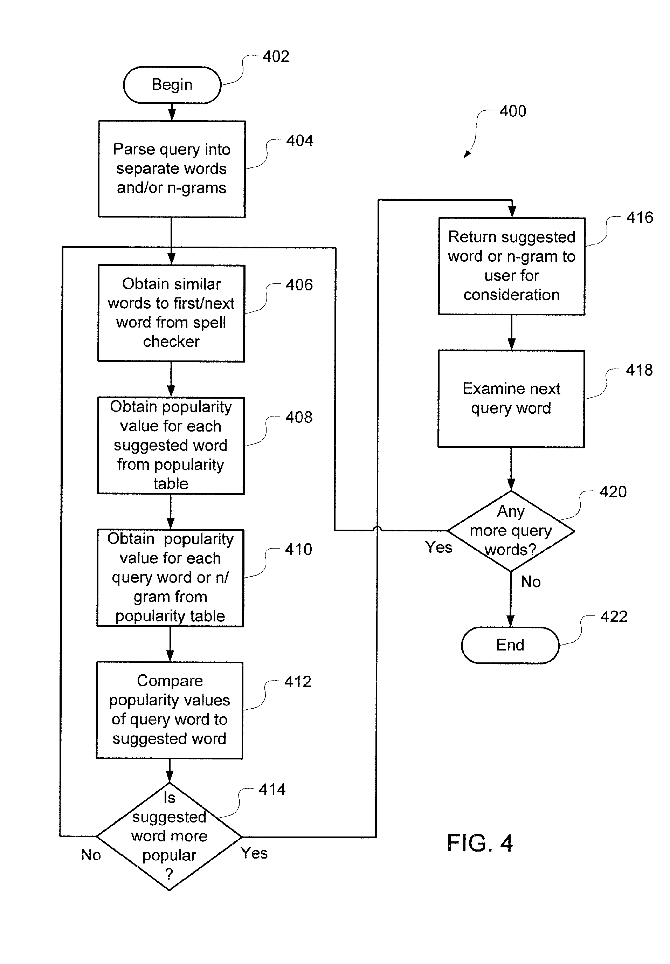

The system memory **230** includes computer storage media in the form of volatile and/or nonvolatile memory such as read only memory (ROM) **231** and random access memory (RAM) **232.** A basic input/output system **233** (BIOS), containing the basic routines that help to transfer information between elements within computer **210,** such as during start-up, is typically stored in ROM **231.** RAM **232** typically contains data and/or program modules that are immediately accessible to and/or presently being operated on by processing unit **220.** By way of example, and not limitation, Fig. **4** illustrates operating system **234,** application programs **235,** other program modules **236** and program data **237.**

The computer **210** may also include other removable/non-removable, volatile/nonvolatile computer storage media. By way of example only, Fig. **2** illustrates a hard disk drive **241** that reads from or writes to non-removable, nonvolatile magnetic media, a magnetic disk drive **451** that reads from or writes to a removable, nonvolatile magnetic disk **452,** and an optical disk drive **255** that reads from or writes to a removable, nonvolatile optical disk **256** such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive **241** is typically connected to the system bus **221** through a non-removable memory interface such as interface **240,** and magnetic disk drive **251** and optical disk drive **255** are typically connected to the system bus **221** by a removable memory interface, such as interface **250.**

The drives and their associated computer storage media, discussed above and illustrated in Fig. **2,** provide storage of computer-readable instructions, data structures, program modules and other data for the computer **210.** In Fig. **2,** for example, hard disk drive **241** is illustrated as storing operating system **244,** application programs **245,** other program modules **246** and program data **247.** Note that these components can either be the same as or different from operating system **234,** application programs **235,** other program modules **236,** and program data **237.** Operating system **244,** application programs **245,** other program modules **246,** and program data **247** are given different numbers herein to illustrate that, at a minimum, they are different copies. A user may enter commands and information into the computer **210** through input devices such as a tablet (electronic digitizer) **264,** a microphone **263,** a keyboard **262** and pointing device **261,** commonly referred to as mouse, trackball or touch pad. Other input devices (not shown) may include a joystick, game pad, satellite dish, scanner, or the like. These and other input devices are often connected to the processing unit **220** through a user input interface **160** that is coupled to the system bus, but may be connected by other interface and bus structures, such as a parallel port, game port or a universal serial bus (USB). A monitor **291** or other type of display device is also connected to the system bus **221** via an interface, such as a video interface **290.** The monitor **291** may also be integrated with a touch-screen panel **293** or the like that can input digitized input such as handwriting into the computer system **210** via an interface, such as a touch-screen interface **292.** Note that the monitor and/or touch screen panel can be physically coupled to a housing in which the computing device **210** is incorporated, such as in a tablet-type personal computer, wherein the touch screen panel **293** essentially serves as the tablet **264.** In addition, computers such as the computing device **210** may also include other peripheral output devices such as speakers **295** and printer **296,** which may be connected through an output peripheral interface **294** or the like.

The computer **210** may operate in a networked environment using logical connections to one or more remote computers, such as a remote computer **280.** The remote computer **280** may be a personal computer, a server, a router, a network PC, a peer device or other common network node, and typically includes many or all of the elements described above relative to the computer **210,** although only a memory storage device **281** has been illustrated in Fig. **2.** The logical connections depicted in Fig. **2** include a local area network (LAN) **271** and a wide area network (WAN) **273,** but may also include other networks. Such networking environments are commonplace in offices, enterprise-wide computer networks, intranets and the Internet.

When used in a LAN networking environment, the computer **410** is connected to the LAN **271** through a network interface or adapter **270.** When used in a WAN networking environment, the computer **210** typically includes a modem **272** or other means for establishing communications over the WAN **273,** such as the Internet. The modem **272,** which may be internal or external, may be connected to the system bus **221** via the user input interface **260** or other appropriate mechanism. In a networked environment, program modules depicted relative to the computer **210,** or portions thereof, may be stored in the remote memory storage device. By way of example, and not limitation, Fig. **2** illustrates remote application programs **285** as residing on memory device **281.** It will be appreciated that the network connections shown are exemplary and other means of establishing a communications link between the computers may be used.

With the computing environment in mind, embodiments of the present invention are described with reference to logical operations being performed to implement processes embodying various embodiments of the present invention. These logical operations are implemented (1) as a sequence of computer implemented steps or program modules running on a computing system and/or (2) as interconnected machine logic circuits or circuit modules within the computing system. The implementation is a matter of choice dependent on the performance requirements of the computing system implementing the invention. Accordingly, the logical operations making up the embodiments of the present invention described herein are referred to variously as operations, structural devices, acts or modules. It will be recognized by one skilled in the art that these operations, structural devices, acts and modules may be implemented in software, in firmware, in special purpose digital logic, and any combination thereof without deviating from the spirit and scope of the present invention as recited within the claims attached hereto.

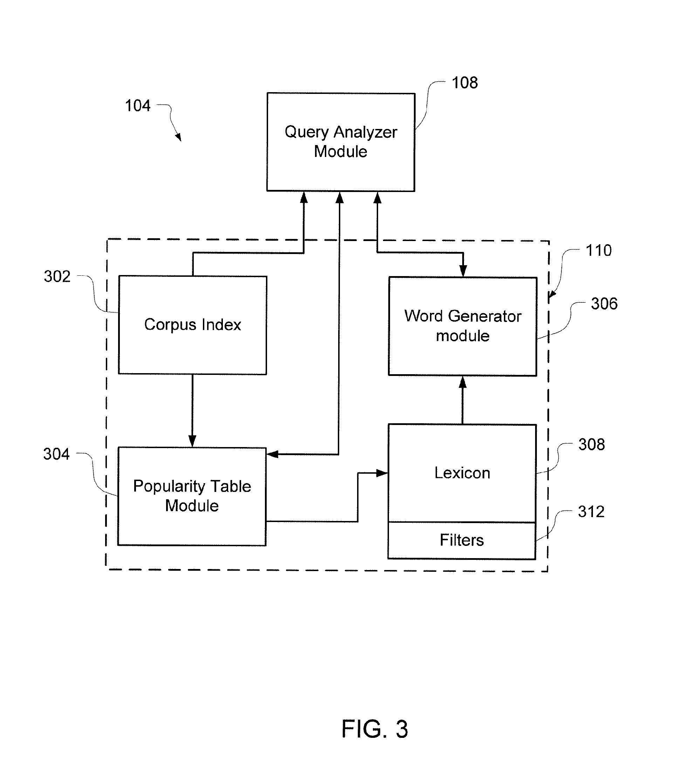

Turning now to FIG. **3,** a more detailed modular diagram of the query suggestion module **104** is provided. The query analyzer module **108** draws information from three defined sources in the relevance module **110:** a corpus index **302,** a popularity table module **304,** and a word generator module **306.**

The corpus index **302** is basically a lexicon of all words that exist in a corpus (domain) of documents to which the application has access. Indexing is the process of extracting words out of documents and lexically arranging the words for fast lookup. Each word is associated with a list of documents that contained the word. This list of word to document set association is called the (inverted) index. The corpus index **302** is dynamic, and as documents are accessed by the calling application they may be added to the corpus such that it continually grows in size as the system **100** is used. The corpus index **302** includes words in all the languages in the corpus and includes n-grams as well as words. Each word/n-gram in the corpus of documents available to the application is associated with the document in which it is used. Thus each word is associated with a list of documents. This list is called an inverted index. In addition, each word may be associated with its frequency of use within a document. This frequency value is also contained for each word in the index **302.**

The popularity table module **304** examines the corpus index **302** and compiles a popularity value associated with each word in the corpus index **302.** This popularity value is also continually updated as new documents are added to the corpus of documents to which the calling application has access. The popularity value may be based on the number oftimes a particular word or n-gram appears in a document, the number of documents in the corpus that contain the word or n-gram, or the absolute number of times the word or n-gram appears in all the corpus documents in the aggregate. Preferably the popularity value is based on the number of corpus documents in which the word or n-gram appears, and is thus a measure of the frequency of word occurrence. Low frequency words are not added to the popularity list.

The word generator lexicon **308** is built using the words in the popularity table module **304.** The lexicon **308** has one or more filters **312** within it to filter out noise words. Noise words are words that appear so frequently that they contribute nothing to the query suggestion process. Such words are articles, prepositions etc. and connector words such as "and" and "or". The lexicon **308** thus draws words from the popularity table, filters out noise words, and the word generator module **306** uses the resulting list of words. Alternatively the filters **312** may be incorporated into the popularity table module **304.** In either case, the filters **312** may operate to reject any words that have a frequency of occurrence above a predetermined value. A filter may also be provided to filter out those words that are extremely infrequently used. The word generator module **306** draws from the lexicon **308.** It analyzes the words in the lexicon **308** for similar spellings and syntax to the query word being examined in the query analyzer, and provides suggested words to the analyzer **108** based on similar spelling and/or syntax. The word generator module **306** is essentially a word generator or spell checker that generates a list of close spellings. A spellchecker that may be used as a word generator in embodiments of the present invention is the conventional Microsoft® Word SpellAPI to suggest close spellings of the query word, comparing the results to the lexicon **308** in order to generate the suggestions provided to the query analyzer module **108.** Alternatively, there is a family of UNIX functions (grep, agrep, egrep, etc.) that generate words of similar spellings to a word being examined. For instance to search a directory for a word close in spelling to 'airpalne' one would write 'agrep -e airpalne' and would expect to receive also files with the word 'airplane'. In general, any approximate pattern-matching algorithm could be used to generate the similar words. One of these may also be used rather than a spellchecker as previously described.

FIG. **4** is an operational flow diagram of the operations **400** occurring in the query analyzer **108** in order to generate alternative suggestions to the user's query **102.** The process **400** begins in operation **402** wherein a user query **102** is sensed. Control then passes to operation **404.**

In operation **404,** the query, which is usually two or more words, is tokenized into individual words or n-grams. Each word is individually analyzed in the below steps. It is to be understood, however, that, at this point, the query could also be parsed into two or three word groupings for analysis. The methodology would, in that case, be quite similar to the individual word approach described herein. Once the query is tokenized, or parsed, into separate words, control transfers to operation **406.**

In operation **406,** the first/next word is examined. The analyzer calls the word generator module **306** and provides the word generator module **306** with the first word. The word generator module **306** then returns any close spellings of the first/next query word that exist in the lexicon **308** as query suggestion words. The analyzer **400** then transfers control to operation **408.**

In operation **408,** the popularity table module **304** is accessed and returns the popularity values for each of the query suggested words. Control then transfers to operation **410** where the popularity value for the first/next query word being examined is also provided to the analyzer **108.** Control then transfers to operation **412.**

In operation **412,** the popularity value for the first/next query word is compared to each popularity value for the suggested alternative words. Control then transfers to query operation **414** where the question is asked whether there is a query suggestion word that is more popular than the user's first/next query word. If the popularity value for the user's first/next query word is greater than the popularity value of the suggested word or words, then the answer is no, and no alternative suggestion is returned. Control transfers back to operation **406** for examination of the next query word. On the other hand, if one or more of the suggested words is more popular than the user's query word, then the answer in operation **414** is yes, and control transfers to operation **416.**

In operation **416,** the query suggestion word or n-gram is slated to be returned by the analyzer **108** to the user as an alternative query word and either can be immediately displayed to the user or held until all words in the query have been examined. In either case, control then passes to operation **418** where the analyzer examines for a next query word. Control then transfers to query operation **420.**

In query operation **420,** the query is made whether there are any more tokenized user query words to be evaluated. If the answer is yes, control transfers again back to operation **406** where the next word is examined. On the other hand, if the answer is no, there are no further words in the user query, control passes to end operation **422,** where the alternative query suggestion words, if any remain to be sent, are displayed to the user as alternatives.

Initially all documents are examined and an index of the words occurring in the corpus of documents is generated. When documents are added to the corpus, a new index, popularity table and lexicon may be generated and substituted for the existing index, popularity table and lexicon. Alternatively, these may be updated as new documents are added.

Although the invention has been described in language specific to structural features, methodological acts, and computer readable media containing such acts, it is to be understood that the invention defined in the appended claims is not necessarily limited to the specific structure, acts or media described. Therefore, the specific structure, acts or media are disclosed herein only as preferred forms of implementing the claimed invention. They should not be interpreted as limiting the scope of the present invention. Further, many variations and changes and alternatives will readily suggest themselves to one ordinarily skilled in the art. Accordingly all such variations, changes and alternatives are also within the intended broad scope and meaning of the invention as defined by the appended claims.

## Claims

1. A method of providing alternative query suggestions to a user making a search query in a software application comprising:
generating an index of all words in a corpus of documents available to the application;
generating a popularity table for the index having a popularity value for each word in the index based on occurrences of the word in the corpus;
comparing each entry in the popularity table to suggestions from a word generator;
compiling a lexicon of word generator suggestion words that are found in the popularity table;
submitting each word in the search query to the word generator to determine suggestion words; and
displaying to the user one or more of the suggestion words from the lexicon that are more popular than the query word.

2. The method according to claim 1 wherein each value in the popularity table is based on a number of word occurrences in all documents in the corpus.

3. The method according to claim 1 wherein each value in the popularity table is based on the greatest frequency of occurrence of the word in a single document in the corpus.

4. The method according to claim 1 wherein the popularity value for each suggestion word is based on the maximum number of documents containing the suggestion word.

5. A system for providing alternative query suggestions to a user comprising:
a processor; and
a memory coupled with and readable by the processor and containing a series of instructions that, when executed by the processor, cause the processor to:
analyze each word in a query with a word generator to determine suggestion words;
compare each suggestion word obtained from the word generator to entries in a popularity table of words to determine popular suggestion words; and
display to the user one or more of the suggestion words that are more popular than the query word.

6. The system according to claim 5 wherein the series of instructions cause the processor analyze each word by:
generating an index of all words in a corpus of documents available to the application;
generating the popularity table having a popularity value for each word in the index based on occurrences of the word in the corpus.

7. The system according to claim 5 wherein the series of instructions cause the processor to:
generate an index of all words in a corpus of documents available to the application;
generate the popularity table for the index having a popularity value for each word in the index based on occurrences of the word in the corpus;
compile a lexicon of word generator suggestion words that are found in the popularity table;
submit each word in the search query to the word generator to determine suggestion words; and
display to the user one or more of the suggestion words from the lexicon that are more popular than the query word.

8. The system according to claim 7 wherein the popularity table is based on the number of occurrences of the word in all the documents in the corpus.

9. The system according to claim 7 wherein the popularity value for each suggestion word is based on the maximum number of documents containing the suggestion word.

10. The system according to claim 7 wherein the popularity value for each suggestion word is based on the maximum number of occurrences of the word within any single document in the corpus.

11. A computer readable medium encoding a computer program of instructions for executing a computer process for providing alternative suggestions to a user query to a user, said computer process comprising:
analyzing each word in the user query with a word generator to determine suggestion words;
comparing each suggestion word obtained from the word generator to entries in a popularity table of words to determine popular suggestion words; and
displaying to the user one or more of the suggestion words that are more popular than the query word.

12. The computer readable medium according to claim 11 wherein analyzing comprises:
generating an index of all words in a corpus of documents available to the application;
generating the popularity table having a popularity value for each word in the index based on occurrences of the word in the corpus.

13. The computer readable medium according to claim 12 wherein each value in the popularity table is based on the greatest frequency of occurrence of the word in a single document in the corpus.

14. The computer readable medium according to claim 12 wherein the popularity value for each suggestion word is based on the maximum number of documents containing the suggestion word.

15. The computer readable medium according to claim 12 further comprising compiling a lexicon of word generator suggestion words that are found in the popularity table.

16. The computer readable medium according to claim 15 wherein each value in the popularity table is based on the greatest frequency of occurrence of the word in a single document in the corpus.

17. The computer readable medium according to claim 15 wherein the popularity value for each word in the popularity table is based on the maximum number of documents in the corpus containing the word.
